# EUROPEAN PATENT SPECIFICATION

(11) **EP 0 997 343 B1**
(45) Date of publication and mention of the grant of the patent: **14.02.2007**
(21) Application number: 99121402.4
(22) Date of filing: 27.10.1999
(51) Int. Cl.: B60Q 1/04, F21V 7/09, F21V 5/00, F21S 8/12

(54) **Projection type headlamp**
Fahrzeugscheinwerfer
Projecteur du type d'un phare

(30) Priority: 27.10.1998 JP 30578198
(43) Date of publication of application: 03.05.2000
(73) Proprietor: Stanley Electric Co., Ltd., Meguro-ku Tokyo 153-8636 (JP)
(72) Inventor: Futami, Takashi, Tokyo 153-8636 (JP)
(74) Representative: Geyer, Ulrich F.

(56) References cited:
- EP-A2- 0 854 316
- WO-A1-81/01185
- DE-A1- 3 311 762

## Description

### BACKGROUND OF THE INVENTION

### Field of the Invention

This invention relates to a vehicle headlamp, and more particularly, to a construction or design of a projection type headlamp in which a projecting lens is disposed such that a focus f3 of the projecting lens corresponds to a second focus f2 of a elliptic reflection surface and a light distribution pattern of the headlamp is formed by projecting a cross-sectional form of luminous flux which converged into the second focus f2.

### Discussion of the Related art

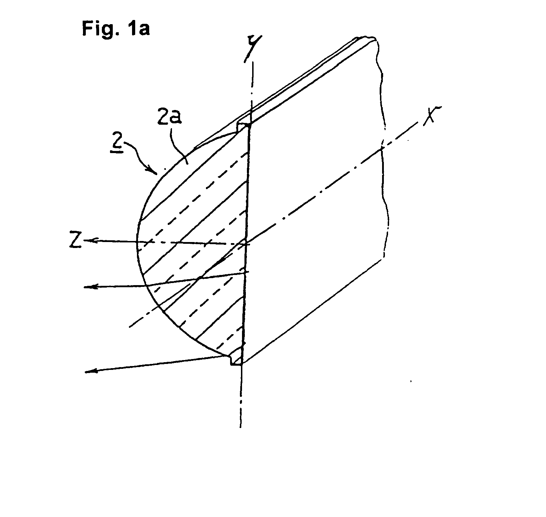

Fig.8 illustrates a conventional projection type headlamp wherein a light source 92 is disposed close to a first focus f1 of a reflector 91 having a rotated elliptic surface and a projecting lens 93 is disposed with a focus f3 in vicinity of he second focus f2 into which light emitted from the light source 92 converges.

Among the light rays converged into the second focus f2, only necessary light rays having appropriate cross-sectional form in order to form the light distribution pattern of the head lamp 90 are passed through the projecting lens 93, and unnecessary light rays are prohibited by a shade 94.

However, the light from the light source 92 converges into the second focus f2 and radiates through the projecting lens 93 to the irradiation direction of the headlamp 90. If the lens 93 is thin, the light rays after passing through the projecting lens 93 are parallel to the horizontal direction. However, since the projecting lens 93 is thick, the light rays after passing through the lens are scattered into various directions. Therefore the projection type lamp 90 is suitable for illuminating only near areas rather than far areas.

In formation of the light distribution pattern of the conventional projection type lamp 90, the luminous intensity distribution can not be freely determined, because intentional concentration or distribution of light rays to predetermined positions is substantially impossible due to diffusing tendency observed after the light rays passed through the substantially circular and thick projecting lens 93. Specifically, it is difficult to form a light distribution pattern for traveling straight ahead which requires long distance visibility provided by large amount of light toward the front direction of the vehicle. Therefore, the conventional projection type lamp 90 is used mainly for motor vehicles requiring short distance visibility rather than long distance visibility.

It is apparent by the above explanation of the conventional projection type headlamp 90 that the projecting lens 93 looks like a circle seen from the front of a vehicle. This form of the projecting lens 93 is unsuitable for the trend of automobile body design. To meet current requirements, it is suggested that the upper and lower portion of the projecting lens 93 could be cut off. In this case, the decreased amount of light causes visibility decrease of the headlamp.

Further attention is drawn to the document EP 0 854 316, which discloses a projector type according to the preamble of claim 1 lamp having a projection lens and a reflector, wherein the projection lens comprises a cylindrical lens portion which forms a center portion of the projection lens and whose vertical cross section has a curve when the projector type lamp is installed and aspherical lens portions which are halves of an aspherical lens and formed continuous to the respective right and left end portions of the cylindrical lens portion. The reflector is divided into four parts located in upper and lower sides and right and left sides thereof; an upper reflection surface, a lower reflection surface, a right reflection surface, and a left reflection surface, the four reflection surfaces being formed as curved surfaces on the basis of oval surfaces and combined together.

In accordance with the present invention a projection type headlamp, as set forth in claim 1, is provided. Preferred embodiments of the invention are claimed in the dependent claims.

### SUMMARY OF THE INVENTION

The present invention is directed to a projection type headlamp that substantially obviates one or more of the above problems due to the limitations and disadvantages of the conventional projection type headlamps.

It is an object of the present invention to be able to use a headlamp for a vehicle. The light distribution pattern of the present invention can be freely determined. Accordingly the light distribution pattern such as for traveling straight ahead which requires long distance visibility can be formed for a headlamp for a vehicle.

It is another object of the invention to form a headlamp which has a suitable lens form for the trend of automobile body designs and which does not decrease the amount of light.

According to the present invention, the above objects are achieved by providing a projection type headlamp comprising an oval projecting lens having a horizontally long extension or length, a light source, and a reflector. Non-spherical lens portions which are formed by dividing a non-spherical lens into two parts at its diameter form the end portions of the oval lens. They are attached to both sides of a semi cylindrical lens portion forming the central portion to form the oval projecting lens. The horizontally longest width or length of the oval projecting lens is called a horizontally long extension in this specification. The semi cylindrical lens portion has a line-shaped focus or a focus line with respect to a reflector in the horizontal direction. The reflector has an ellipse including a first focus close to the light source in the vertically cross-sectional view and a second focus close to the focus line in the vertically cross-sectional view. In addition, a free curved surface with respect to the horizontal cross-sectional view gives the predetermined horizontally irradiation angle to the light emitted from the light source, the width of the free curved surface is the same as that of the semi cylindrical portion in the horizontal direction.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to describe the principles of the invention.
Fig. 1 is a perspective view indicating disassembled parts of a portion of a projection type headlamp of a first preferred embodiment of the present invention.
Fig. 1a is a perspective sectional view of a semi-cylindrical portion of an oval lens of the first embodiment.
Fig. 2 is a cross-sectional view of a projection type head lamp along an A-A line of Fig. 1.
Fig. 3 is a cross-sectional view of a projection type head lamp along a B-B line of Fig. 1.
Fig. 4 is a cross-sectional view of a projection type headlamp according to a second preferred embodiment of the present invention.
Fig. 5 is a cross-sectional view of a projection type headlamp according to a third preferred embodiment of the present invention.
Fig. 6 is a cross-sectional view of a projection type headlamp according to a fourth preferred embodiment of the present invention.
Fig.7 is a cross-sectional view of a projection type headlamp according to a fifth preferred embodiment of the present invention.
Fig.8 is a cross-sectional view of a conventional projection type headlamp.

### DETAILED DESCRIPTION OF THE PREFERRED EMBODIMENTS

The preferred embodiments of the present invention will be described with reference to the drawings.

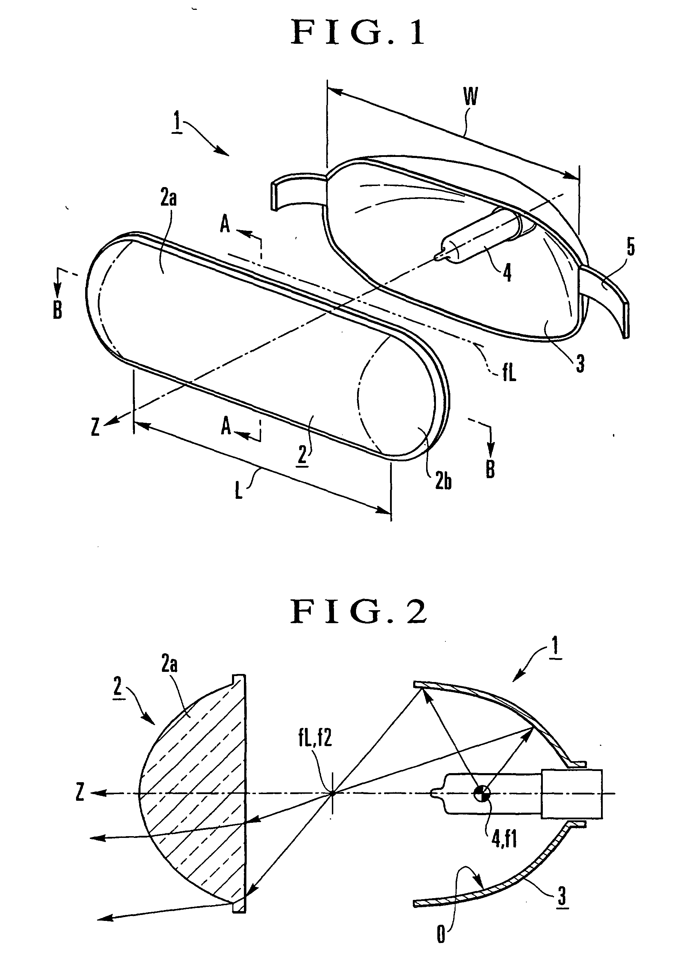

The first preferred embodiment of the present invention is shown in Fig. 1, 2 and 3. This projection type headlamp 1 in Fig. 1,2 and 3 comprises, similarly to the conventional projection type headlamp 90, a light source 4, a reflector 3 and a projecting lens 2.

In this embodiment, the projecting lens 2 is formed as an oval projecting lens 2, i.e. the lens 2 is oval as seen from the front (left in Fig.1). The oval projection lens 2 is elongated in the horizontal direction (X-direction in Fig. 1a) having a horizontally long extension or dimension. The oval projecting lens 2 has a horizontally long dimension and comprises a semi cylindrical lens portion 2a whose width is L and, preferably, also two non-spherical lens portions 2b which are attached to the respective ends of the semi cylindrical lens portion 2a. When the lamp1 is attached to a vehicle, the width L of the semi cylindrical lens portion 2a is attached horizontally with respect to the vehicle. The non-spherical lens portions 2b are formed by dividing a non-spherical lens (i.e. the one shown in Fig. 8) into two parts at a central plane and by attaching the two parts such that the divided surfaces face each other separated by the width L of the semi cylindrical lens portion 2a.

Accordingly, the oval projecting lens 2 has a focal or focus line fL having the same length as the width L of the semi cylindrical lens portion 2a.

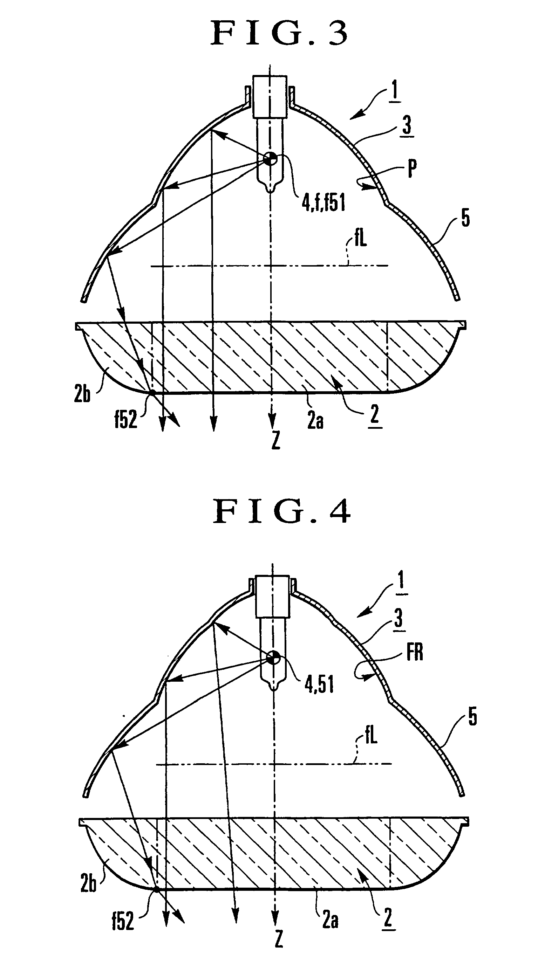

In addition, the vertically cross-sectional view (Fig. 2) of the reflector 3 is different from the horizontally cross-sectional view (Fig. 3) of the reflector 3. In the vertically cross-sectional view (Fig. 2) of this first embodiment, The reflector 3 has the shape of an ellipse O, wherein a first focus f1 is formed close to the light source 4, and a second focus f2 of the ellipse O is close to the focus fL of the oval projecting lens 2. In the horizontally cross-sectional view (Fig. 3), The reflector has the shape of a parabola P whose focus f is close to the light source 4, and the width W of the reflector 3 corresponds to the width or length L of the semi cylindrical lens portion 2a.

The light from the light source 4 converges close to the focus line fL in the vertical direction as indicated in Fig. 2. The light from the light source 4 becomes parallel to an optical axis Z in the horizontal direction as indicated in Fig. 3.

The semi cylindrical lens portion 2a of the oval projecting lens 2 has a convex or curved or outwardly projecting surface in the vertically cross-sectional view (Fig. 2). The light from the light source 4 is adjusted to the appropriate irradiation angle by the convex or curved surface and is radiated at a predetermined irradiation angle. On the other hand, in the horizontally cross-sectional view (Fig. 3), the semi cylindrical lens portion 2a has no curvature and therefore the light is radiated in parallel through the lens to the outside .

In the vertical direction, both the reflector 3 and the semi cylindrical lens portion 2a affect the formation of the light distribution characteristic. In the horizontal direction, only the reflector 3 affects or determines the light distribution characteristic. Therefore, in order to use this projection type headlamp in automobiles, the focus of the parabola P in the horizontal cross-sectional direction (Fig. 3) is required to be positioned in the front of the light source 4 in the radiation direction such that light reflected by the reflector P diffuses horizontally.

Preferably, a side reflector 5 is attached to the reflector 3. The side reflector 5 has its first focus f51 located close to the light source 4 and its second focus f52 is located close to the top portion or apex of the non-spherical lens portions 2b.

The light from the light source 4 reflected by the side reflector 5 converges close to the area of the non-spherical lens portions 2b, and each light ray goes forward towards the optical axis Z of the projection type headlamp 1. Accordingly, the light rays cross the optical axis Z of the projection type headlamp 1, and then spread in the horizontal direction. The light distribution characteristic of the projection type head lamp 1 is determined by a combination of light reflected by the side reflector 5 and the reflector 3.

Irradiation angle and irradiation direction can be flexibly changed by the position or by the width in the vertical direction of the side reflector 5. For example, if the side reflector 5 is mounted on the upper side of the horizontal line passing the light source 4, the light reflected from the side reflector 5 travels passing only the lower side of the horizontal line.

Fig. 4 illustrates a second preferred embodiment of this invention. Since the light distribution characteristic in the horizontal direction is determined by the reflector 3, not only the form of light distribution characteristic but also the amount of light is easily determined by changing the curvature of the horizontal cross-sectional surface of this reflector 3. Accordingly, in order to realize the projection type headlamp 1 which can provide illumination far in front of the headlamp, a free curved surface FR is used as a reflector 3. The center portion of the reflector 3 can spread the light from the light source 4 in the horizontal direction and both the right and left ends of the reflector 3 can reflect the light from the light source 4 in parallel directions to the optical axis Z.

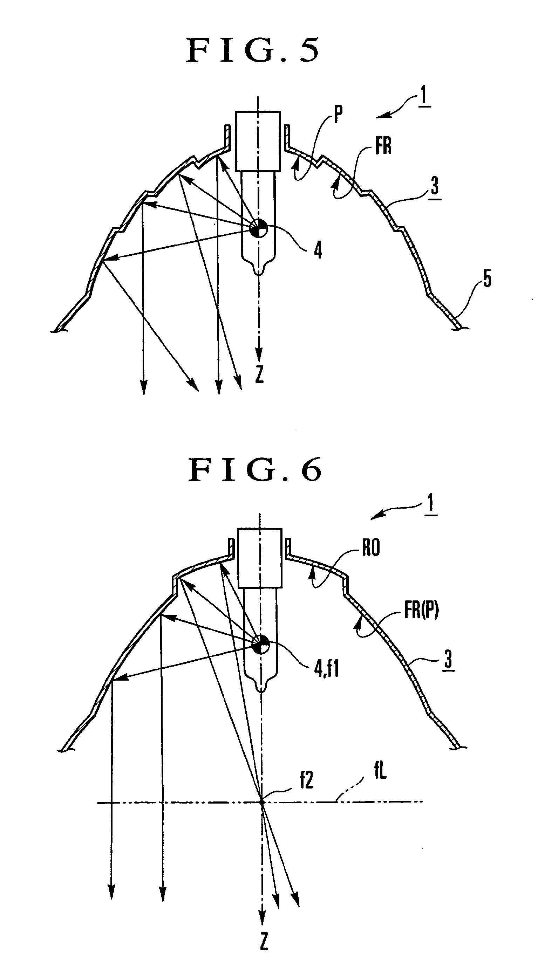

The curve of the horizontal cross-sectional view of the reflector 3 is not limited to a parabola P or the free curved surface FR. As shown in Fig.5, a multi-reflector 3 can be used for the projection type headlamp 1. The multi-reflector is formed by dividing the internal surface of the reflector 3 into plural sections which respectively have flexibly determined areas and positions. A parabola P, a free curved surface FR, a parabolic semi cylindrical surface, or the like, can be combined to form the multi-reflector surface 3.

Fig. 6 illustrates the third preferred embodiment of this invention, wherein the rotated elliptic surface RO which has the first focus f1 close to the light source 4 and the second focus f2 close to the focus line (focal line) fL is disposed in the center of the reflector 3, and the free curved surface FR or the parabola P is disposed on both the right and left sides of the reflector 3 and reflects light from the light source 4 into a parallel direction to the optical axis Z. The irradiation angle of the reflected light from the rotated elliptic surface RO is narrowed only in the vertical direction by the semi cylindrical lens 2a and the irradiation angle of the light from the light source 4 is maintained in the horizontal direction. On the other hand, the reflected light from the free curved surface FR or the parabola P is radiated in the forward direction to a far distance.

Since the oval projecting lens 2 including the semi cylindrical lens portion 2a is used, it becomes possible to form a light distribution characteristic in a horizontal direction by a reflecting surface or the reflector on the back side of the oval projecting lens 2. The semi cylindrical lens portion 2a does not have an optical function with regard to the formation of the light distribution pattern in a horizontal direction, but has only a function in a vertical direction. Therefore, the form or the distribution of the light amount of the projection type lamp 1 can be easily determined by combining reflecting surfaces having various irradiation angle, i.g. horizontally wide or converging to a spot in a horizontal direction.

According to tests and experiments by the inventors, the semi cylindrical lens portion 2a of the elongated oval projecting lens 2 requires to have a horizontal width or length over 30 millimeter, and preferably the horizontal width of the projection type lamp 1 is 2 - 6 times longer than the vertical height of the projection type lamp 1.

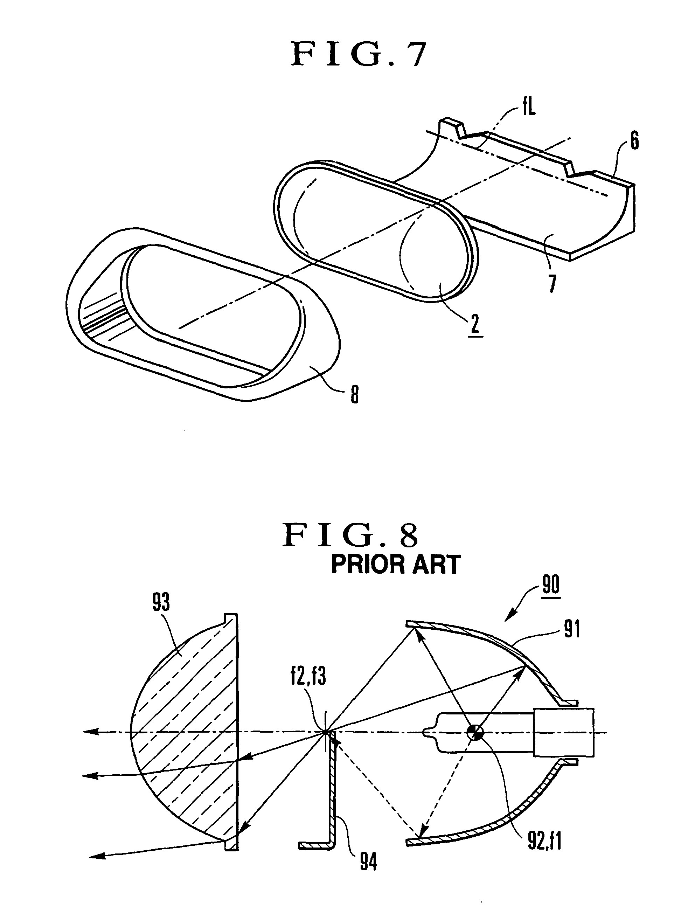

The light distribution pattern of the projection type lamp 1 is switched from travelling mode to passing mode. When passing, light distribution is required, as shown in Fig. 7, a shade 6 mounted close to the lined-focus fL is moved to its passing position.

The shade 6 has an inner extension 7. Since the semi cylindrical lens portion 2a which does not have a lens function in the horizontal direction is mounted to the projection type headlamp 1, the inner construction tends to be seen through the surface of the elongated oval projecting lens 2, and that may cause an undesirable appearance of the projection type headlamp 1.

In order to prevent this problem, the inner construction is covered by the inner extension 7. In order to obtain an aesthetic appearance, the inner extension 7 is made from materials of automobile body color or black color, or materials shined by chromium coating or aluminum evaporation.

When the shade 6 is mounted to the projection type lamp 1, the inner extension 7 lies between the oval projecting lens 2a and the shade 6 and the inner extension 7 and the shade 6 may be formed as one unit.. In addition, as shown in Fig. 7, an outer extension 8 can be formed along a perimeter of the oval projecting lens 2 on the side of the radiation direction. The material of the outer extension 8 is the same as that of the inner extension 7. By attaching the outer extension 8 to the elongated oval projecting lens 2, it is prevented that the inner construction of the projection type lamp 1 is seen from outside of the projection type lamp 1.

The operational advantages of the present invention will now be described. The projection type headlamp 1 comprises the elongated oval projecting lens 2 having a horizontally long dimension, the light source 4 and the reflector 3. The oval projecting lens 2 is a combination of the semi cylindrical lens 2a whose center portion is horizontally parallel to the focus line fL and non-spherical lens portions 2b vertically symmetrical to each other with respect to a vertical mirror plane. The semi cylindrical lens portion 2a is arranged between the non-spherical lens portions 2b. The reflector 3 is preferably an ellipse in the vertical cross-sectional view having the first focus f1 close to the light source 4 and the ellipse having the second focus close to the focus line fL. In the horizontal cross-sectional view, the reflector 3 has a free curved line adjusting the light from the light source 4 to predetermined horizontal radiation angles. The width W of the reflector 3 is the same as the length L of the semi cylindrical lens portion 2a. First, since the semi cylindrical lens portion 2a does not have an optical function in the horizontal direction, the reflector 3 positioned on the back side of the projection type headlamp 1 can contribute to the formation of the light distribution characteristic. For example, the amount of light, the irradiation to a distant place, can easily be determined. Second, since the projection type headlamp 1 includes the elongated oval projecting lens 2, the projection type headlamp 1 is vertically short and fits for automobile designs which have a horizontally elongated body. Third, the projection type headlamp 1 contributes to the good appearance of automobiles, because the inner extension 7 and outer extension 8 prevent the inner construction to be seen from the outside of the projection type headlamp 1. It will be apparent to those skilled in the art that various modifications and variations can be made to the projection type headlamp of the present invention without departing from the scope of the invention, as defined by the appended claims.

## Claims

1. A projection type headlamp (1) having an elongated oval projecting lens (2) having a horizontally long extension, a light source (4) and a reflector comprising an inner reflector (3) and a side reflector (5), wherein the oval projecting lens (2) comprises a semi cylindrical lens portion (2a) having a focus line (fL) and vertically half-divided non-spherical lens portions (2b) which are attached to the both ends of the semi cylindrical lens portion (2a); and
the inner reflector (3) has a surface which is elliptic in the vertically cross-sectional view having a first focus (f1) close to the light source (4) and a second focus (f2) close to the focus line (fL) in the center of the reflector, and the inner reflector has a surface which is free curved (FR) in the horizontally cross-sectional view which adjusts the light rays from the light source (4) in a predetermined horizontal illumination angle on the both the right and left side of the reflector, and the reflector has a side reflector (5) having a first focus (f51) close to the light source (4) and a second focus (f52) **characterized in that** the second focus (f52) is close to the top portion or apex of the non-spherical lens portions (2b), and the width of the inner reflector (3) is the same as that of the semi cylindrical lens portion (2a).

2. The projection type headlamp (1) of claim 1, wherein the inner reflector (3) has a parabolic surface (P) in a horizontal cross-sectional view.

3. The projection type headlamp (1) of claim 1, wherein the light distribution pattern of the projection type headlamp (1) in the vertical direction is determined by both the reflector and the oval projecting lens (2), and the light distribution pattern in the horizontal direction is determined only by the reflector.

4. The projection type headlamp (1) of claim 1, wherein the reflector is a combination of a plurality of sections having different positions, dimensions, and forms, and the horizontal width of the entire reflector is the same as that of the elongated oval projecting lens (2).

5. The projection type headlamp (1) of claim 1, wherein a shade (6) is mounted close to the focus line (fL) of the semi cylindrical lens portion (2a).

6. The projection type headlamp (1) of claim 1, wherein an inner extension (7) made from colored or shiny materials is mounted at a position between the oval projecting lens (2) and the reflector (3).

7. The projection type headlamp (1) of claim 1, wherein the inner extension (7) lies between the oval projecting lens (2) and the shade (6).

8. The projection type headlamp (1) of claim 1, wherein the inner extension (7) and the shade (6) are formed as one unit.

9. The projection type headlamp (1) of claim 1, wherein an outer extension (8) made from colored or shiny materials is formed along a perimeter on the irradiation side of the oval projecting lens (2) having a horizontally long diameter.

10. The projection type headlamp (1) of claim 1, wherein the width of the semi cylindrical lens portion (2a) of the oval projecting lens (2) is over 30 millimeter and the horizontal width or length of the oval projecting lens (2) seen from the front is from 2 to 6 times longer than the vertical width of the oval projecting lens (2).

## Patentansprüche

1. Projektionsscheinwerfer (1) mit einer langgestreckt ovalen Projektionslinse (2), die eine lange Erstreckung in horizontaler Richtung aufweist, einer Lichtquelle (4) und einem Reflektor, der einen inneren Reflektor (3) und einen Seitenreflektor (5) umfasst,
wobei die ovale Projektionslinse (2) einen halbzylindrischen Linsenteil (2a) mit einer Brennpunktslinie (fL) und vertikal halbierte nicht-sphärische Linsenteile (2b), welche an beiden Enden des halbzylindrischen Linsenteils (2a) befestigt sind, umfasst; und
wobei der innere Reflektor (3) eine Oberfläche aufweist, welche in vertikaler Querschnittsansicht elliptisch ist und einen ersten Brennpunkt (f1) nahe der Lichtquelle (4) und einen zweiten Brennpunkt (f2) nahe der Brennpunktslinie (fL) in der Mitte des Reflektors aufweist, und wobei der innere Reflektor eine frei gekrümmte Oberfläche (FR) in horizontaler Querschnittsansicht aufweist, welche die Lichtstrahlen von der Lichtquelle (4) in einem vorbestimmten horizontalen Beleuchtungswinkel sowohl zur rechten als auch zur linken Seite des Reflektors anpasst, und wobei der Reflektor einen Seitenreflektor (5) mit einem ersten Brennpunkt (f51) nahe der Lichtquelle (4) und einem zweiten Brennpunkt (f52) aufweist,
**dadurch gekennzeichnet, dass**
der zweite Brennpunkt (f52) sich nahe dem oberen Teil oder dem Scheitelbereich der nicht-sphärischen Linsenteile (2b) befindet und die Breite des inneren Reflektors (3) die gleiche ist wie die des halbzylindrischen Linsenteils (2a).

2. Projektionsscheinwerfer (1) nach Anspruch 1, bei dem der innere Reflektor (3) in einer horizontalen Querschnittssicht eine parabolische Oberfläche (P) aufweist.

3. Projektionsscheinwerfer (1) nach Anspruch 1, bei dem das Lichtverteilungsmuster des Projektionsscheinwerfers (1) in seitlicher Richtung sowohl vom Reflektor als auch von der ovalen Projektionslinse (2) bestimmt ist und das Lichtverteilungsmuster in horizontaler Richtung nur vom Reflektor bestimmt ist.

4. Projektionsscheinwerfer (1) nach Anspruch 1, bei dem der Reflektor eine Kombination aus einer Vielzahl von Abschnitten mit unterschiedlichen Positionen, Dimensionen und Formen ist und die horizontale Breite des gesamten Reflektors die gleiche ist wie die der langgestreckten ovalen Projektionslinse (2).

5. Projektionsscheinwerfer (1) nach Anspruch 1, bei dem eine Abschirmung (6) nahe der Brennpunktslinie (fL) des halbzylindrischen Linsenteils (2a) befestigt ist.

6. Projektionsscheinwerfer (1) nach Anspruch 1, bei dem eine innere Erweiterung (7) aus farbigen oder glänzenden Materialien an einer Position zwischen der ovalen Projektionslinse (2) und dem Reflektor (3) befestigt ist.

7. Projektionsscheinwerfer (1) nach Anspruch 1, bei dem die innere Erweiterung (7) zwischen der ovalen Projektionslinse (2) und der Abschirmung (6) liegt.

8. Projektionsscheinwerfer (1) nach Anspruch 1, bei dem die innere Erweiterung (7) und die Abschirmung (6) einstückig ausgeformt sind.

9. Projektionsscheinwerfer (1) nach Anspruch 1, bei dem eine äußere Erweiterung (8), die aus farbigen oder glänzenden Materialien hergestellt ist, entlang eines Umfangs an der Abstrahlungsseite der ovalen, eine lange Erstreckung in horizontaler Richtung aufweisenden Projektionslinse (2) ausgebildet ist.

10. Projektionsscheinwerfer (1) nach Anspruch 1, bei dem die Breite des halbzylindrischen Linsenteils (2a) der ovalen Projektionslinse (2) über 30 mm beträgt und die horizontale Breite oder Länge der ovalen Projektionslinse (2) in Vorderansicht zwei- bis sechsmal länger ist als die vertikale Breite der ovalen Projektionslinse (2).

## Revendications

1. Phare de type projecteur (1) ayant une lentille de projection ovale (2) allongée s'étendant dans la direction horizontale, une source lumineuse (4) et un réflecteur comprenant un réflecteur interne (3) et un réflecteur latéral (5), dans lequel la lentille de projection ovale (2) comprend une partie de lentille semi-cylindrique (2a) ayant une ligne focale (fL) et comportant des parties de lentille non sphériques (2b) divisées en deux verticalement qui sont fixées aux deux extrémités de la partie de lentille semi-cylindrique (2a) ; et
le réflecteur interne (3) a une surface qui est elliptique dans une vue en coupe verticale ayant un premier foyer (f1) près de la source lumineuse (4) et un second foyer (f2) près de la ligne focale (fL) au centre du réflecteur, et le réflecteur interne a une surface qui est courbée de façon libre (FR) dans une vue en coupe horizontale qui règle les rayons lumineux de la source lumineuse (4) selon un angle d'illumination horizontal prédéterminé du côté droit et du côté gauche du réflecteur, et le réflecteur comporte un réflecteur latéral (5) ayant un premier foyer (f51) près de la source lumineuse (4) et un second foyer (f52),
**caractérisé en ce que** le second foyer (f52) est proche de la partie supérieure ou sommet des parties de lentilles non sphériques (2b) et la largeur du réflecteur interne (3) est la même que celle de la partie de lentille semi-cylindrique (2a).

2. Phare de type projecteur (1) selon la revendication 1, dans lequel le réflecteur interne (3) a une surface parabolique (P) dans une vue en coupe horizontale.

3. Phare de type projecteur (1) selon la revendication 1, dans lequel la figure de distribution lumineuse du phare de projection (1) dans la direction verticale est déterminée par le réflecteur et la lentille de projection ovale (2), et la figure de distribution lumineuse dans la direction horizontale est déterminée seulement par le réflecteur.

4. Phare de type projecteur (1) selon la revendication 1, dans lequel le réflecteur est une combinaison de plusieurs parties ayant des positions, des dimensions et des formes différentes et la largeur horizontale de l'ensemble du réflecteur est identique à celle de la lentille de projection ovale (2) allongée.

5. Phare de type projecteur (1) selon la revendication 1, dans lequel un écran (6) est monté près de la ligne focale (fL) de la partie de lentille semi-cylindrique (2a).

6. Phare de type projecteur (1) selon la revendication 1, dans lequel une extension interne (7) faite en matériau coloré ou brillant est montée à une position comprise entre la lentille de projection ovale (2) et le réflecteur (3).

7. Phare de type projecteur (1) selon la revendication 1, dans lequel l'extension interne (7) se trouve entre la lentille de projection ovale (2) et l'écran (6).

8. Phare de type projecteur (1) selon la revendication 1, dans lequel l'extension interne (7) et l'écran (6) sont d'une seule pièce.

9. Phare de type projecteur (1) selon la revendication 1, dans lequel une extension externe (8) faite de matériau coloré ou brillant est formée le long du périmètre du côté irradiation de la lentille de projection ovale (2) ayant un diamètre horizontal long.

10. Phare de type projecteur (1) selon la revendication 1, dans lequel la largeur de la partie de lentille semi-cylindrique (2a) de la lentille de projection ovale (2) est supérieure à 30 mm et la largeur horizontale ou longueur de la lentille de projection ovale (2) vue de l'avant est 2 à 6 fois supérieure à la largeur verticale de la lentille de projection ovale (2).
